# EUROPÄISCHE PATENTSCHRIFT

(11) **EP 1 417 374 B1**
(45) Veröffentlichungstag und Bekanntmachung des Hinweises auf die Patenterteilung: **08.08.2007**
(21) Anmeldenummer: 02735370.5
(22) Anmeldetag: 21.05.2002
(51) Int. Cl.: D06N 3/06, D06N 7/00, E04F 15/10

(54) **FLEXIBLER BODENBELAG MIT REGENERATIVER, SCHMUTZABWEISENDER OBERFLÄCHE**
FLEXIBLE FLOOR COVERING WITH REGENERATIVE, SOILING-RESISTANT SURFACES
REVETEMENT DE SOL SOUPLE DOTE D'UNE SURFACE REGENERATRICE RESISTANT AUX SALISSURES

(30) Priorität: 29.05.2001 DE 10126122
(43) Veröffentlichungstag der Anmeldung: 12.05.2004
(73) Patentinhaber: Armstrong DLW AG, 74321 Bietigheim-Bissingen (DE)
(72) Erfinder: MAUK, Hanns-Jörg, 74395 Mundelsheim (DE); VON OLNHAUSEN, Heinz, 74321 Bietigheim-Bissingen (DE); REICHERT, Siegfried, D-74391 Erligheim (DE); PETZOLD, Peter, D-74354 Besigheim (DE)
(74) Vertreter: Müller-Boré & Partner Patentanwälte
(86) Internationale Anmeldenummer: PCT/EP2002/005567
(87) Internationale Veröffentlichungsnummer: WO 2002/099182

(56) Entgegenhaltungen:
- EP-A- 0 149 868
- EP-A- 0 742 098
- DD-A- 236 091
- US-A- 4 501 783
- US-A- 4 886 708

## Beschreibung

Die Erfindung betrifft einen flexiblen bzw. elastischen Sodenbelag mit verbesserter, schmutzabweisender Oberfläche und verbesserter Verschleißfestigkeit. Insbesondere betrifft die Erfindung einen flexiblen Bodenbelag mit einer Matrix auf Basis von Natur und/oder Kunststoffen, welche mindestens eine Substanz enthält, die mit der Matrix unverträglich ist. Der erfindungsgemäße flexible Bodenbelag zeichnet sich durch ein verbessertes Anschmutzverhalten und eine erhöhte Verschleißfestigkeit aus.

Flexible Bodenbeläge auf Basis von Natur und/oder Kunststoffen, d.h. Bodenbeläge, die eine Matrix bzw. ein Bindemittel auf Basis von Natur- und/oder Kunststoffen aufweisen, wie beispielsweise Linoleumbodenbeläge, Bodenbeläge auf Basis von Polyolefinen, PVC-Bodenbeläge etc., werden in großem Umfang verwendet.

Neben den hervorragenden Gebrauchseigenschaften von flexiblen Bodenbelägen, insbesondere PVC-Bodenbelägen, aber auch Bodenbelägen auf Basis anderer Kunststoffe oder auf Basis von Naturstoffen, weisen die Bodenbeläge in Abhängigkeit von z.B. der Art und des Anteils an Füllstoff bzw. Füllstoffen und anderer Zusätze während des Gebrauchs eine mehr oder weniger starke Neigung zur Anschmutzung auf, welche zu einer Verschlechterung der optischen Eigenschaften des Bodenbelags führt.

In der Praxis begegnet man diesem Effekt beispielsweise durch spezielle reinigende und teilweise auch pflegende Substanzen, die auf den Bodenbelag aufgebracht werden, um die gewünschten optischen Eigenschaften zu bewahren bzw. wiederherzustellen.

Im Normalfall werden zu diesem Zweck stark polymerhaltige Wachsdispersionen aufgetragen, die einen 5 bis 10 µm dicken Film bilden, der für die Zeit seines Vorhandenseins als eine Nutzschicht wirkt, die durch den Gebrauch nach und nach abgetragen wird.

Diese, z.B. durch polymerhaltige Wachsdispersionen gebildeten Beschichtungen müssen, sobald sich durch unterschiedlich starke Beanspruchung sogenannte Laufstrassen gebildet haben, aufwendig ausgebessert bzw. saniert werden. Dies geschieht durch eine vollständige, sogenannte Grundreinigung, bei der die Beschichtung mit stark alkalisch wirkenden Reinigungsmitteln entfernt wird und danach eine neue Beschichtung aufgebracht wird. Dies ist vergleichsweise kostenintensiv, da die gesamte Bodenfläche, egal ob reparaturbedürftig oder nicht, gesäubert und wieder neu beschichtet werden muß. Außerdem sind die betreffenden Bodenflächen für mindestens einen Tag nicht begehbar.

Es wird zum Teil versucht, die vorgenannten Nachteile dadurch zu vermeiden, daß eine Trockenreinigungsmethode angewandt wird, bei der die Oberschicht der Beschichtung mit geeigneten Schleifmitteln, sogenannten Schleif-pads, poliert wird, um die Laufspuren und den in den Kratzern und Rillen haftenden Schmutz zu entfernen. Dies ist jedoch ebenfalls mit einem flächendeckenden Materialabtrag verbunden, wobei erschwerend hinzukommt, daß für das Abschleifen schwere und teure Maschinen notwendig sind, die zudem oftmals mangels Verfügbarkeit oder wegen ihrer Größe und ihres Gewichts nicht an allen Bedarfsorten eingesetzt werden können.

Seit einigen Jahren werden daher Kunststoffbodenbeläge, insbesondere PVC-Bodenbeläge zunehmend mit Lacken auf Polyurethan-Basis (sogenannten PU-Versiegelungen) versiegelt, um die Reinigungs- und Sanierungskosten zu senken. Derartige PU-Versiegelungen, die wasserbasierend oder auch lösemittelfrei, z.B. UV-härtend, sein können, weisen normalerweise Schichtdicken im Bereich von etwa 5 bis etwa 50 µm auf.

PU-Versiegelungen sind verhältnismäßig widerstandsfähig, und bei Vorhandensein von Wachsanteilen können sie sogar polierfähig sein.

Allerdings weisen PU-Versiegelungen u.a. den Nachteil auf, daß sie in Abhängigkeit der Frequentierung und der Schwere der Beanspruchung zur Ausbildung von verhältnismäßig tiefen bzw. ausgeprägten Kratzern neigen, so daß Laufstrassen erheblich anschmutzen und einen deutlich verschlechterten optischen Eindruck vermitteln. Zudem weisen PU-Versiegelungen, im Gegensatz zu manchen Pflegefilmen und - Beschichtungen, wegen ihrer irreversiblen Härtung den weiteren Nachteil auf, daß sie nicht repariert werden können, so daß sie nur mit erheblichem apparativen Aufwand vollständig entfernt werden können, wonach eine neue PU-Versiegelung aufgebracht werden muß, was naturgemäß mit hohen Kosten verbunden ist

US-A-4,886,708 beschreibt ein Verfahren zur Herstellung eines Bodenbelags oder einer Wandabdeckung auf Plastisolbasis, worin ein Siliconpolymer als mit der Matrix unverträgliche Substanz vorgesehen ist.

EP 0 149 868 A2 beschreibt ein Verfahren zur Herstellung eines Bodenbelagmaterials, wobei die äußere Nutzschicht aus einem Plastisol besteht und eine wachsartige Substanz in der Nutzschicht vorgesehen ist.

EP 0 742 098 A1 beschreibt ein Bodenbelagsmaterial, umfassend ein Olefinharz als Basismaterial und einen arorganischen Füllstoff, wobei ein Wachs in einer Menge von 1 bis 10 Gew.-% in mindestens der Oberflächenschicht vorhanden ist.

US-A-4,501,783 beschreibt ein nicht rutschiges Kunststoffbodenbelagsmaterial, umfassend eine Matrixschicht aus Polyvinylchlorid mit darin über die gesamte Dicke verteilten synthetischen Harzteilchen.

Aufgabe der vorliegenden Erfindung ist es daher, einen flexiblen bzw. elastischen Bodenbelag auf Basis von Natur- und/oder Kunststoffen bereitzustellen, der eine Oberfläche mit verbesserter Schmutzabweisung, d.h. reduzierte bzw. verminderte Anschmutzneigung bei gleichzeitiger hoher Verschleißfestigkeit, aufweist.

Diese Aufgabe wird mit dem In Anspruch 1 gekennzeichneten Gegenstand gelöst Bevorzugte Ausführungsformen des erfindungsgemäßen Bodenbelags sind in den Unteransprüchen definiert.

Die Erfindung beruht dabei auf der Erkenntnis, daß einem flexiblen Bodenbelag eine hoch-verschleißfeste Oberfläche mit hervorragenden schmutzabweisenden Eigenschaften verliehen werden kann, indem der Matrix bzw. dem Bindemittel des Bodenbelags mindestens eine Substanz zugegeben wird, die mit dem Material der Matrix unverträglich ist und, sofern die mindestens eine Substanz eine begrenzte Verträglichkeit mit dem Matrixmaterial besitzt, in einer solchen Menge, daß die Verträglichkeitsgrenze überschritten wird.

Durch die gezielte Unverträglichkeit von mindestens einer Substanz mit dem Matrixmaterial in dem Bodenbelag, migriert die mindestens eine Substanz zwar langsam aber beständig aus dem Bodenbelag an die Oberfläche des Bodenbelags und bildet so einen sich ständig erneuernden Schutz, selbst wenn die an die Oberfläche migrierende Substanz durch Begehen des Bodenbelags abgenutzt bzw. abgetragen wird.

Das Material für die Matrix bzw. das Bindemittel des erfindungsgemäßen Bodenbelags unterliegt keiner besonderen Beschränkung und kann ausgewählt sein aus Polyvinylchlorid (PVC), Ethylen-Vinylacetat-Copolymer (EVA), Homo-und Copolymeren von ethylenisch ungesättigten Verbindungen, Ethylen-Alkylacrylat-Copolymeren, Ethylen-Propylen-Dien-Mischpolymeren (EPDM), Dienenthaltenden Blockcopolymeren, Linoleum und Polyreaktionsprodukte-enthaltende Materialien auf Basis nachwachsender Rohstoffe. Die vorgenannten Materialien können sowohl einzeln als auch in geeigneten Gemischen vorliegen.

Die erfindungsgemäßen Bodenbeläge können sowohl homogene Bodenbeläge als auch heterogene Bodenbeläge sein. Homogene Bodenbeläge sind gemäß DIN EN 12466 (1997) Bodenbeläge, welche aus einer oder mehreren Schichten aufgebaut sind, mit jeweils gleicher Zusammensetzung und Farbe, die durchgehend durch die gesamte Dicke des Belages gemustert sind, wohingegen heterogene Bodenbeläge aus einer Nutzschicht und weiteren kompakten Schichten bestehen, die sich in der Zusammensetzung und/oder Musterung unterscheiden und eine Stabilisierungseinlage enthalten können.

Die erfindungsgemäßen Bodenbeläge können auf einem Träger aufgebracht sein und ein Vlies oder Gewebe, beispielsweise ein. Armierungsgewebe, aufweisen. Für derartige Zwecke sind natürliche und synthetische, sowohl anorganische als auch organische Materialien wie Jute, Polyestervliese und -gewebe, Vliese und Gewebe aus ummantelten Polyesterfasern. Glasfasern etc. verwendbar.

In den erfindungsgemäßen Bodenbelägen umfaßt die Matrix bzw. das Bindemittel vorzugsweise mindestens ein Polymer und/oder mindestens ein Copolymer. Ein besonders bevorzugtes Polymer ist dabei PVC.

Unter dem hier verwendeten Begriff "PVC" versteht man ein durch übliche Potymerisationsverfahren, wie Suspensionspolymerisation (S-PVC). Emulsionspolymerisation (E-PVC) und Substanz- bzw. Massepolymerisation (M-PVC) erhältliches Polyvinylchlorid mit einem Gehalt an Weichmachern von größer als 12 Gew.-%, bezogen auf das PVC. Ein PVC mit einem Weichmachergehalt von größer als 12 Gew.% wird auch als "Weich-PVC" bezeichnet.

Technische Polyvinylchloride weisen normalerweise Molmassen von 30.000 - 130.000 g/mol auf, was K-Werten von 45 bis 80 entspricht. Es sind jedoch im Handel auch Polyvinylchloride mit K-Werten von 100 erhältlich.

Als Weichmacher können in den erfindungsgemäßen Bodenbelägen grundsätzlich alle üblichen Weichmacher verwendet werden, wie beispielsweise Phthalsäureester, Trimellitsäureester, Phosphorsäureester, Benzoesäureester, Polymer-Weichmacher, wie Polyester aus Adipin-, Sebacin-, Azelain- und Phthalsäure mit Diolen etc.

Erfindungsgemäß bevorzugt sind Ester der Phthalsäure, wie Dioctylphthalat (DOP), Bis(2-ethylhexyl)-phthalat, Diisononylphthalat (DINP), Diisododecylphthalat (DIDP), Dibutylphthalat (DBP), Diethylphthalat (DEP), Benzylbutylphthalat (BBP), Butyloctylphthalat, Dipentylphthalat und dergleichen.

Flexible bzw. elastische Bodenbeläge auf PVC-Basis enthalten Weichmacherhaltiges PVC als Bindemittel und übliche Zusätze wie Füllstoffe, Färbemittel, wie Pigmente und organische und anorganische Farbstoffe, und Hilfsstoffe.

Als Füllstoffe werden vorzugsweise Kreide, Bariumsulfat, Schiefermehl, Kieselsäure, Kaolin, Quarzmehl, Talkum, Lignin, Zellulose, Glas, Textil- oder Glasfasern, Cellulosefasern und Polyesterfasern eingesetzt, und zwar in einer Menge von vorzugsweise 25 bis 60 Gew.%, bezogen auf die Gesamtmasse des Bodenbelages.

Ferner können die Bodenbeläge übliche Hilfsmittel wie beispielsweise Antioxidanzien, Antistatika, Stabilisatoren, UV-Absorber, Treibmittel, Fungizide, Gleitmittel und Bearbeitungshilfsmittel in den üblichen Mengen enthalten.

PVC-Bodenbeläge weisen im Vergleich mit flexiblen bzw. elastischen Bodenbelägen aus anderen Polymeren bzw. Polymergemischen hervorragende Eigenschaften, Insbesondere im Hinblick auf Verschleißfestigkeit, Anschmutzverhalten und lange Lebensdauer auf. Dennoch werden PVC-Bodenbeläge, wie eingangs erwähnt, zur Erhöhung der Verschleißfestigkeit, vor allem jedoch zur Verbesserung der schmutzabweisenden Eigenschaften und zur Verhinderung von Kratzern und Trittspuren, mit einem werksseitigen Oberflächen-Finish bzw. einer Beschichtung (z.B. polymerhaltige Wachsdispersion; PU-Versiegelung) versehen.

Flexible Bodenbeläge weisen üblicherweise eine Dicke im Bereich von 1 mm bis 4 mm, vorzugsweise 1,5 mm bis 3 mm, und mehr bevorzugt 2 mm auf.

Sofern der Bodenbelag eine Matrix bzw. ein Bindemittel auf PVC-Basis enthält, handelt es sich bei den erfindungsgemäßen Bodenbelägen um PVC mit einem Weichmachergehalt von größer als 12 Gew.-%. Vorzugsweise enthält das PVC einen Weichmacher, z.B. Dioctylphthalat (DOP), in einer Menge von 20 Gew.-%, bezogen auf das Gewicht des gesamten Bodenbelages einschließlich Füllstoff(en) und gegebenenfalls weiterer Zusatzstoffe.

Das PVC besitzt einen K-Wert im Bereich von 40 bis 80, vorzugsweise im Bereich von 65 bis 70.

Der Bodenbelag enthält üblicherweise mindestens einen teilchenförmigen Füllstoff, z.B. einen anorganischen Füllstoff, in einer Menge von 25 bis 60 Gew.-%, bezogen auf das Gesamtgewicht des Bodenbelags.

Die erfindungsgemäßen Bodenbeläge können eine transparente Beschichtung oder ein transparentes Oberflächen-Finish auf Basis von Weich-PVC aufweisen, wobei die Dicke der Beschichtung 10 µm bis 100 µm betragen kann, wobei eine Dicke von 40 µm bis 80 µm bevorzugt ist. Normalerweise beträgt die Beschichtungsdicke 50 µm.

Das in der Beschichtung eingesetzte PVC weist einen K-Wert von 60 bis 80, vorzugsweise 80, auf. Das Verhältnis von PVC zu Weichmacher liegt in der Beschichtung im Bereich von 80 Gew.-% zu 20 Gew.-%, bis 60 Gew.-% zu 40 Gew.-% und beträgt vorzugsweise 70 Gew.-% zu 30 Gew.-%, bezogen auf die Summe aus PVC und Weichmacher.

Die Beschichtung Ist bei den erfindungsgemäßen Bodenbelägen transparent. Es können jedoch Füllstoffe und andere Additive in die Beschichtungsmasse eingebracht werden, solange die Transparenz, z.B. zur Erzielung eines bestimmten optischen Effekts, nicht unter ein gewünschtes vorbestimmtes Maß herabgesetzt wird.

Die Matrix der Beschichtung kann grundsätzlich aus einem anderen Material bestehen, als das des eigentlichen Bodenbelags. Es ist jedoch bevorzugt, daß die Matrixmaterialien der Beschichtung und des Bodenbelags gleich sind.

Die vorliegende Erfindung beruht auf der Erkenntnis, daß insbesondere das Anschmutzverhalten eines flexiblen Bodenbelags verbessert werden kann, indem man dem Bodenbelag mindestens eine Substanz zugibt, die mit dem Matrixmaterial unverträglich ist. Wenn die Substanz mit dem Matrixmaterial eine begrenzte Verträglichkeit besitzt, muß sie in einer solchen Menge zugegeben werden, daß die Verträglichkeitsgrenze merklich überschritten wird.

Es hat sich im Rahmen der vorliegenden Erfindung erwiesen, daß die Zugabe von mindestens einer mit der Matrix unverträglichen Substanz dazu führt, daß sich diese Substanz langsam von dem Bodenbelag absondert, indem sie an die Oberfläche migriert. Dieser Effekt ist durch zeitliche Messung der Oberflächenspannung bzw. Oberflächenenergie des Bodenbelages meßbar, z.B. unmittelbar nach der Herstellung des Bodenbelags und in zeitlichen Abständen danach. In Abhängigkeit von der Art des als Matrix verwendeten Materials und der damit unverträglichen Substanz bzw. Substanzen kann eine Änderung der Oberflächenspannung bereits nach kurzer Zeit, z.B. innerhalb weniger Stunden nach Herstellung des Bodenbelags, festgestellt werden. Es wurde beispielsweise festgestellt, daß die Oberflächenenergie eines PVC-Bodenbelages durch Zugabe von Amidwachsen Innerhalb weniger Tage von ca. 40 Dyn/cm auf weniger als 25 Dyn/cm abnimmt. Da die Migration andererseits sehr langsam fortschreitet, wird bzw. werden die mit der Matrix unverträgliche Substanz bzw. Substanzen über einen sehr langen Zeitraum aus der Oberfläche des Bodenbelags austreten, wodurch ein sich ständig erneuernder "Schutzfilm" gebildet wird, selbst wenn die aus der Oberfläche austretende Substanz beim Begehen des Bodenbelags teilweise oder im Bereich der Laufstrassen vorübergehend auch vollständig abgetragen wird.

Dieser sich ständig bildende bzw. erneuernde "Schutzfilm" führt zu einer deutlichen Verbesserung des Anschmutzverhaltens, d.h. zu einer deutlich verbesserten Schmutzabweisung, wodurch der Bodenbelag seine ansprechenden optischen Eigenschaften über einen vergleichsweise längeren Zeitraum beibehält

Ein weiterer Vorteil des erfindungsgemäßen Bodenbelags ist es, daß er auf einfache Weise gereinigt und gepflegt werden kann.

Unter einer mit der Matrix unverträglichen Substanz bzw. (unter mit der Matrix unverträglichen) Substanzen wird/werden wachsartige bzw. wachsähnliche Stoffe, Silikonöle und fluorierte Kohlenwasserstoffe verstanden.

Da Silikonöle und fluorierte Kohlenwasserstoffe bei höheren Zugabemengen in einem gewissen Ausmaß das Anschmutzverhalten des Bodenbelags verschlechtern und zu einer Trübung führen können, was insbesondere in einer Beschichtung zu einer Beeinträchtigung der Transparenz führt, sind erfindungsgemäß jedoch wachsartige Stoffe bevorzugt.

Es hat sich in der Fachwelt eine übereinstimmende Definition für den Begriff "wachsartige" bzw. "wachsähnliche Stoffe gebildet. Man versteht darunter eine Gruppe von Stoffen mit gleichen oder ähnlichen Gebrauchseigenschaften, die durch besondere physikalische Eigenheiten bedingt sind. Nach der derzeit anerkannten Definition ist der Begriff "Wachs" bzw. "wachsartiger Stoff eine technologische Sammelbezeichnung für eine Reihe natürlicher und künstlich gewonnener Stoffe, welche sich in die vier Hauptgruppen Naturwachse, modifizierte Naturwachse, teilsynthetische Wachse und vollsynthetische Wachse einteilen lassen.

Eine den Wachsen bzw. wachsartigen Stoffen gemeinsame physikalische Eigenschaft ist es, daß sie oberhalb von 40°C ohne Zersetzung schmelzen. Es ist erfindungsgemäß bevorzugt, daß als mit der Matrix unverträgliche Substanz ein Gemisch von mindestens zwei wachsartigen Stoffen eingesetzt wird, wobei sich die wachsartigen Stoffe mindestens in Ihrem Schmelzpunkt unterscheiden. Damit wird das Temperaturverhalten der erfindungsgemäßen Bodenbeläge günstig beeinflußt, da sich ein ständig erneuernder Schutzfilm auch bei unterschiedlichen Temperaturen, denen der Bodenbelag (beispielsweise auch über längere Zeiträume) ausgesetzt ist, bildet Es hat sich erwiesen, daß sich ein Unterschied in den Schmelzpunkten von mindestens 10°C, vorzugsweise mindestens 20°C, günstig auf den erfindungsgemäßen Effekt der Verbesserung des Anschmutzverhaltens des Bodenbelags auswirkt.

Als wachsartige Stoffe werden erfindungsgemäß die Amidwachse, d.h. die Umsetzungsprodukte aus Fettsäuren mit Aminen, verwendet.

Es ist bekannt, Weich-PVC-Mischungen, aus denen beispielsweise Folien hergestellt werden, Wachse als Anti-Blocking-Mittel zuzusetzen. Es ist ferner bekannt, daß bestimmte Fettsäureamide bei der Herstellung von Kunststoffbodenbelägen als Gleitmittel in einer Menge von 0,5 bis 1,0 Gew.-%, bezogen auf die Gesamtmasse des Bodenbelagsmaterials, zugesetzt werden. Bei Bodenbelägen auf PVC-Basis werden beispielsweise Zusätze von bis zu 1 Gew.-% Fettsäureamid als Gleitmittel bei der Verarbeitung empfohlen. In diesem Mengenbereich ist jedoch die Verträglichkeitsgrenze des Fettsäureamids in der PVC-Masse noch nicht überschritten, so daß der erfindungsgemäße Effekt nicht auftreten kann.

Erfindungsgemäß wird daher die mit der Matrix unverträgliche Substanz bzw. ein Gemisch aus mindestens zwei unverträglichen Substanzen in einer Menge von 1,5 Gew.-% bis 15 Gew.-%, vorzugsweise 2 Gew.-% bis 12 Gew.-%, und mehr bevorzugt 2,5 Gew.-% bis 10 Gew.-%, bezogen auf das Matrixmaterial, zugegeben.

Die unverträgliche(n) Substanz(en) kann bzw. können bei einem Bodenbelag, der eine Beschichtung aufweist, sowohl der Mischmasse für den Bodenbelag als auch der Mischmasse für die Beschichtung zugegeben werden. Es ist jedoch bevorzugt, in einem solchen Fall die unverträgliche(n) Substanz(en) nur der Mischmasse für die Beschichtung zuzugeben, weil dadurch die Gefahr verringert wird, daß die unverträgliche(n) Substanz(en) auch zu der der Nutzschicht gegenüberliegenden Oberfläche des Bodenbelags migriert bzw. migrieren und dabei möglicherweise einen abträglichen Einfluß auf die Verklebbarkeit des Bodenbelags mit dem Untergrund ausübt bzw. ausüben.

Wenn die unverträgliche(n) Substanz(en) nur der Mischmasse für die Beschichtung zugegeben wird/werden, beträgt die Menge vorzugsweise 1,5 Gew.-% bis 6 Gew.-%, bezogen auf das Matrixmaterial der Beschichtung. Mehr bevorzugt ist eine Menge von 1,5 Gew.-% bis 5 Gew.-%, und am meisten bevorzugt 2 bis 4 Gew.-%.

Die flexiblen Bodenbeläge gemäß der vorliegenden Erfindung werden in an sich bekannter Weise hergestellt, indem alle Komponenten, wie z.B. polymeres Bindemittel, unverträgliche Substanz(en), Färbemittel, Füllstoffe, Additive, Bearbeitungshilfsmittel und andere Hilfsstoffe vorgemischt und über Aggregate, wie z.B. Innenmischer, Zweiwellenextruder, Planetwalzenextruder, plastifiziert und granuliert werden. Nachfolgend werden die Granulatteilchen in Verdichtungsaggregaten, wie z.B. Kalander, Doppelbandpresse oder statische Presse, zu einer Bahn oder Platte verpreßt. Die eingesetzten Granulate sind üblicherweise verschiedenfarbig, um einen gemusterten Bodenbelag herzustellen.

Zur Herstellung von Bodenbelägen auf PVC-Basis werden üblicherweise PVC-Plastisole im Streichverfahren auf eine Trägerschicht aufgebracht und anschließend geliert. Die Plastisolschicht kann dabei als Druckträger zur entsprechenden dekorativen Gestaltung bzw. Musterung des Belages mit einem Mehrfarbentiefdruck versehen werden.

Es hat sich im Rahmen der vorliegenden Erfindung gezeigt, daß das durch die Einarbeitung von unverträglichen Substanzen in den Bodenbelag verbesserte Anschmutzverhalten noch weiter verbessert werden kann, wenn die Oberfläche des Bodenbelags mit einer vorbestimmten Struktur versehen wird. Dies kann beispielsweise mit einer Prägewalze erreicht werden.

Vorzugsweise handelt es sich bei der vorbestimmten Struktur um eine gleichmäßige Prägung bzw. eine Prägung mit einem regelmäßigen Muster von Erhebungen und Vertiefungen. Es hat sich erwiesen, daß der Effekt der zusätzlichen Oberflächenstrukturierung am ausgeprägtesten ist, wenn der durchschnittliche Abstand zwischen Profilspitzen in der Mittellinie, entsprechend dem sogenannten Sm-Wert oder Rillenabstand Sm gemäß DIN 4768, in einem Bereich von größer als 200 µm und kleiner als 1000 µm liegt.

Hinsichtlich der Höhe der Erhebungen (gemittelte Rauhtiefe R_{z} gemäß DIN 4768) des geprägten Materials hat sich ein Wert im Bereich von 20 µm bis 200 µm als vorteilhaft erwiesen.

Der Grund für die Verbesserung des Anschmutzverhaltens durch die zusätzliche Oberflächenstrukturierung ist noch nicht im einzelnen geklärt. Ohne sich auf eine bestimmte Theorie festlegen zu wollen, wird jedoch angenommen, daß durch die aufgrund der Prägung resultierenden Vergrößerung der Oberfläche des Bodenbelags die anfallende Schmutzmenge auf eine größere Menge von an die Oberfläche migrierter unverträglicher Substanz trifft, die somit einen wirksameren Schutzfilm bildet. Ferner dürfte die Prägung auch einen Einfluß auf die Benetzbarkeit des Bodenbelags und damit das Eindringen von Schmutzpartikeln in die Vertiefungen der Prägung und das schließliche Anhaften der Schmutzpartikel haben.

Eine weitere Verbesserung der Gebrauchseigenschaften von erfindungsgemäßen Bodenbelägen, insbesondere im Hinblick auf die Verschleißfestigkeit, kann erreicht werden, indem in die Matrix des bzw. die Mischmasse für den Bodenbelag ein teilchenförmiges Material mit einer größeren Härte als der des Matrixmaterials eingearbeitet wird. Bei Bodenbelägen, die mit einer Beschichtung bzw. einem Oberflächen-Finish gemäß der vorliegenden Erfindung versehen werden, genügt es an sich, wenn das teilchenförmige Material mit einer größeren Härte nur der Mischmasse für die Beschichtung zugegeben wird oder in die Oberfläche der resultierenden Beschichtung eingearbeitet wird. Das härtere teilchenförmige Material kann jedoch auch in den Bodenbelag selbst eingearbeitet sein, wodurch die erhöhte Verschleißfestigkeit über den gesamten Querschnitt des Bodenbelags erreicht wird.

Besonders günstig für die Verbesserung der Verschleißfestigkeit ist es, wenn die Teilchen mit einer größeren Härte so in die Oberfläche der Beschichtung bzw. des Bodenbelags eingearbeitet sind, daß sie nicht vollständig von der den Bodenbelag bildenden Mischmasse umgeben sind, sondern zu einem Teil ihres Durchmessers aus der Oberfläche herausragen. Dies kann beispielsweise dadurch erreicht werden, daß das teilchenförmige Material mit einer größeren Härte als der des Matrixmaterials auf die nach der Herstellung noch nicht verfestigte bzw. hart gewordene Oberfläche der Beschichtung bzw. des Bodenbelags aufgestreut und dann z.B. mit Hilfe von Walzen so in die Oberfläche hineingepreßt wird, daß die Teilchen noch bis zu einem gewissen Maß aus der Oberfläche herausragen.

Eine andere Möglichkeit besteht darin, die Teilchen mit größerer Härte bereits der Mischmasse vor der Herstellung des Bodenbelags bzw. der Beschichtung zuzugeben und dann die Prägung der erhaltenen Oberfläche nicht vollständig auszuführen, so daß die erhabenen Stellen des geprägten Bodenbelags bzw. der geprägten Beschichtung nicht vollständig in die Vertiefungen der Prägewalze eintauchen. Auch so wird erreicht, daß Teilchen mit größerer Härte exponiert in der Oberfläche zurückbleiben und teilweise aus der Oberfläche herausragen.

Dies hat den doppelten Effekt, daß einerseits dem Abrieb aufgrund der höheren Härte der (teilweise) herausragenden Teilchen ein größerer Widerstand entgegengesetzt wird und andererseits auch verhindert wird, daß der sich durch das Ausmigrieren der unverträglichen Substanz(en) gebildete Schutzfilm durch das Begehen des Bodenbelags zu schnell abgenutzt wird.

Die Art des teilchenförmigen Materials unterliegt keiner besonderen Beschränkung und kann sowohl anorganisch als auch organisch sein. Es ist jedoch bevorzugt, daß das teilchenförmige Material mit einer größeren Härte als der des Matrixmaterials auf Polymerbasis gebildet ist.

Die Teilchen des Materials mit einer größeren Härte weisen vorzugsweise einen größten Durchmesser im Bereich von 2 µm bis 100 µm auf, wobei der Durchmesser bei Bodenbelägen bzw. Beschichtungen mit strukturierter Oberfläche im Hinblick auf die Sm-Werte und die Rauhigkeit ausgewählt werden sollte.

Das teilchenförmige Material mit größerer Härte wird in einer Menge von 1 Gew.-% bis 20 Gew.-%, bezogen auf die Gesamtmenge des Matrixmaterials, in den Bodenbelag bzw. in die Beschichtung eingearbeitet. Vorzugsweise liegt die Menge im Bereich von 3 Gew.-% bis 15 Gew.-%, und mehr bevorzugt im Bereich von 5 Gew.-% bis 10 Gew.-%.

Als Material für die Teilchen größerer Härte haben sich im Rahmen der vorliegenden Erfindung spezielle PVC-Typen mit einem K-Wert von 100, die einen Weichmachergehalt von größer als 12 Gew.-% aufweisen, als besonders geeignet erwiesen. Diese Teilchen eignen sich insbesondere auch für Bodenbeläge bzw. Beschichtungen, deren Matrixmaterial auf PVC-Basis beruht, da der K-Wert dieser für die Matrix verwendeten PVC-Typen normalerweise im Bereich von 40 bis 80 liegt und die PVC-Teilchen mit größerer Härte (K-Wert etwa 100) beim Plastifizieren des PVC nicht aufgeschlossen werden.

## Patentansprüche

1. Flexibler Kunststoffbodenbelag mit regenerativer, schmutzabweisender Oberfläche, umfassend eine Matrix auf Basis von Natur- und/oder Kunststoffen und mindestens eine Substanz, welche mit der Matrix unverträglich ist, **dadurch gekennzeichnet, daß** die mit der Matrix unverträgliche Substanz ein Amidwachs ist bzw. Amidwachse sind.

2. Flexibler Kunststoffbodenbelag nach Anspruch 1, wobei die Matrix ausgewählt ist aus einem oder mehreren von Polyvinylchlorid (PVC), Ethylenvinylacetat-Copolymer (EVA), Homo- oder Copolymeren von ethylenisch ungesättigten Verbindungen, Ethylen-Alkylacrylat-Copolymeren, Ethylen-Propylen-Dien-Mischpolymeren (EPDM), Dienenthaltenden Blockcopolymeren, Linoleum und Polyreaktionsprodukte-enthaltende Materialien auf Basis nachwachsender Rohstoffe.

3. Flexibler Kunststoffbodenbelag nach Anspruch 1 oder 2, wobei der Kunststoffbodenbelag homogen oder mehrschichtig ist.

4. Flexibler Kunststoffbodenbelag nach einem oder mehreren der Ansprüche 1 bis 3, wobei die Matrix mindestens ein Polymer und/oder Copolymer umfaßt

5. Flexibler Kunststoffbodenbelag nach Anspruch 4, wobei die Matrix im wesentlichen PVC umfaßt.

6. Flexibler Kunststoffbodenbelag nach Anspruch 5, wobei das PVC der Matrix einen K-Wert im Bereich von 40 bis 80 aufweist.

7. Flexibler Kunststoffbodenbelag nach einem oder mehreren der Ansprüche 5 bis 6, wobei das PVC Weichmacher in einer Menge von mehr als 12 Gew.-%, bezogen auf PVC, enthält.

8. Flexibler Kunststoffbodenbelag nach einem oder mehreren der vorhergehenden Ansprüche, wobei die unverträgliche Substanz in einer Menge von 1,5-15 Gew.-%, bezogen auf die Gesamtmenge der Matrix, vorhanden ist.

9. Flexibler Kunststoffbodenbelag nach einem oder mehreren der vorhergehenden Ansprüche, wobei die regenerative, schmutzabweisende Oberfläche durch eine Beschichtung gebildet ist

10. Flexibler Kunststoffbodenbelag nach Anspruch 9, wobei die Beschichtung eine Dicke von 10 bis 100 µm aufweist.

11. Flexibler Kunststoffbodenbelag nach einem der Ansprüche 9 oder 10, wobei die Beschichtung auf Basis der Matrix des Bodenbelags gebildet ist.

12. Flexibler Kunststoffbodenbelag nach einem oder mehreren der Ansprüche 9 bis 11, wobei nur die Beschichtung die mit der Matrix unverträgliche Substanz enthält; und zwar in einer Menge von 1,5 bis 6 Gew.-%, bezogen auf die Matrix der Beschichtung.

13. Flexibler Kunststoffbodenbelag nach einem oder mehreren der vorhergehenden Ansprüche, wobei die Oberfläche eine vorbestimmte Struktur aufweist.

14. Flexibler Kunststoffbodenbelag nach Anspruch 13, wobei die vorbestimmte Struktur ein Profil mit Erhebungen und Vertiefungen ist, wobei der durchschnittliche Abstand zwischen Profilspitzen in der Mittellinie (Sm) mehr als 200 µm und weniger als 1000 µm beträgt.

15. Flexibler Kunststoffbodenbelag nach Anspruch 13 oder 14, wobei die Höhe der Erhebungen (Rauhtiefe) im Bereich von 20 µm bis 200 µm liegt.

16. Flexibler Kunststoffbodenbelag nach einem oder mehreren der Ansprüche 1 bis 15, wobei in die Matrix ein teilchenförmiges Material mit einer größeren Härte als der der Matrix eingearbeitet ist.

17. Flexibler Kunststoffbodenbelag nach Anspruch 16, wobei die regenerative, schmutzabweisende Oberfläche durch eine Beschichtung gemäß einem oder mehreren der Ansprüche 10 und 11 gebildet ist, und das teilchenförmige Material mit einer größeren Härte als der der Matrix nur in die Beschichtung eingearbeitet ist

18. Flexibler Kunststoffbodenbelag nach Anspruch 16 oder 17, wobei das teilchenförmige Material auf Polymerbasis gebildet ist.

19. Flexibler Kunststoffbodenbelag nach einem oder mehreren der Ansprüche 16 bis 18, wobei die Teilchen des teilchenförmigen Materials einen größten Durchmesser im Bereich von 2 µm bis 100 µm aufweisen.

20. Flexibler Kunststoffbodenbelag nach einem oder mehreren der Ansprüche 16 bis 19, wobei das teilchenförmige Material mit einer größeren Härte in einer Menge von 1 bis 20 Gew.-% bezogen auf die Gesamtmenge des Matrixmaterials vorhanden ist

21. Flexibler Kunststoffbodenbelag nach einem oder mehreren der Ansprüche 16 bis 20, wobei die Teilchen des teilchenförmigen Materials mit größerer Härte entweder vollständig oder nur teilweise in der Oberfläche der Matrix eingebettet sind.

22. Flexibler Kunststoffbodenbelag nach einem oder mehreren der Ansprüche 16 bis 21, wobei die Matrix im wesentlichen ein PVC mit einem Weichmachergehalt von mehr als 12 Gew.-%, bezogen auf PVC, und mit einem K-Wert von 40 bis 80 umfaßt und das teilchenförmige Material mit einer größeren Härte ein PVC mit einem Weichmachergehalt von mehr als 12 Gew.-%, bezogen auf PVC, und mit einem K-Wert von etwa 100 umfaßt .

## Claims

1. Resilient artificial-material floor covering with regenerative, dirt-repellent surface, comprising a matrix based on natural and/or synthetic materials and at least one substance incompatible with the matrix, **characterized in that** the substance incompatible with the matrix is an amide wax or amide waxes.

2. Resilient artificial-material floor covering according to Claim 1, wherein the matrix is selected from one or more of polyvinyl chloride (PVC), ethylene-vinyl acetate copolymer (EVA), homo- or copolymers of ethylenically unsaturated compounds, ethylene-alkyl acrylate copolymers, ethylene-propylene-diene monomer interpolymers (EPDM), diene-containing block copolymers, linoleum and polymeric materials based on renewable raw materials.

3. Resilient artificial material floor covering according to Claim 1 or 2, wherein the artificial-material floor covering is homogeneous or multilayered.

4. Resilient artificial-material floor covering according to one or more of the Claims 1 to 3, wherein the matrix comprises at least one polymer and/or copolymer.

5. Resilient artificial-material floor covering according to Claim 4, wherein the matrix comprises essentially PVC.

6. Resilient artificial-material floor covering according to Claim 5, wherein the PVC of the matrix has a K-value in the range from 40 to 80.

7. Resilient artificial-material floor covering according to one or more of the Claims 5 to 6, wherein the PVC contains plasticizer in an amount of more than 12 wt.%, based on PVC.

8. Resilient artificial-material floor covering according to one or more of the preceding claims, wherein the incompatible substance is present in an amount of 1.5-15 wt.%, based on the total amount of the matrix.

9. Resilient artificial-material floor covering according to one or more of the preceding claims, wherein the regenerative, dirt-repellent surface is formed by a coating.

10. Resilient artificial-material floor covering according to Claim 9, wherein the coating has a thickness of 10 to 100 µm.

11. Resilient artificial-material floor covering according to any one of the Claims 9 or 10, wherein the coating is formed on the basis of the matrix of the floor covering.

12. Resilient artificial-material floor covering according to one or more of the Claims 9 to 11, wherein only the coating contains the substance incompatible with the matrix, in an amount of 1.5 to 6 wt.%, based on the matrix of the coating.

13. Resilient artificial-material floor covering according to one or more of the preceding claims, wherein the surface has a predetermined structure.

14. Resilient artificial-material floor covering according to Claim 13, wherein the predetermined structure is a profile with elevations and recesses, the average spacing between profile peaks in the centreline (Sm) being more than 200 µm and less than 1000 µm.

15. Resilient artificial-material floor covering according to Claim 13 or 14, wherein the height of the elevations (depth of roughness) is in the range from 20 µm to 200 µm.

16. Resilient artificial-material floor covering according to one or more of the Claims 1 to 15, wherein the matrix incorporates a particulate material having a hardness greater than that of the matrix.

17. Resilient artificial-material floor covering according to Claim 16, wherein the regenerative, dirt-repellent surface is formed by a coating according to one or more of the Claims 10 and 11, and the particulate material having a hardness greater than that of the matrix is incorporated in the coating only.

18. Resilient artificial-material floor covering according to Claim 16 or 17, wherein the particulate material is polymer based.

19. Resilient artificial-material floor covering according to one or more of the Claims 16 to 18, wherein the particles of the particulate material have a largest diameter in the range from 2 µm to 100 µm.

20. Resilient artificial-material floor covering according to one or more of the Claims 16 to 19, wherein the particulate material having a greater hardness is present in an amount of 1 to 20 wt.% based on the total amount of matrix material.

21. Resilient artificial-material floor covering according to one or more of the Claims. 16 to 20, wherein the particles of the particulate material having greater hardness are either fully or only partially embedded in the surface of the matrix.

22. Resilient artificial-material floor covering according to one or more of the Claims 16 to 21, wherein the matrix comprises essentially a PVC having a plasticizer content of more than 12 wt.%, based on PVC, and having a K-value of 40 to 80 and the particulate material having a greater hardness comprises a PVC having a plasticizer content of more than 12 wt.%, based on PVC, and having a K-value of about 100.

## Revendications

1. Revêtement de sol en plastique souple présentant une surface régénérative repoussant les salissures, comprenant une matrice à base de substances naturelles et/ou de plastiques et au moins une substance qui n'est pas compatible avec la matrice, **caractérisé en ce que** la substance non compatible avec la matrice est une cire amide ou des cires amides.

2. Revêtement de sol en plastique souple selon la revendication 1, la matrice étant choisie dans le groupe constitué d'un ou plusieurs chlorures de polyvinyle (PVC), copolymère éthylène-acétate de vinyle (EVA), homo- ou copolymères de composés éthylènes insaturés, copolymères éthylène-alkylacrylate, des polymères mixtes éthylène-propylène-diène (EPDM), des copolymères en bloc contenant des diènes, le linoléum et des matériaux contenants des produits polyréactionnels à base de matière première renouvelables.

3. Revêtement de sol en plastique souple selon la revendication 1 ou 2, le revêtement en plastique étant homogène ou multicouche.

4. Revêtement de sol en plastique souple selon l'une quelconque ou plusieurs des revendications 1 à 3, la matrice comprenant au moins un polymère et/ou un copolymère.

5. Revêtement de sol en plastique souple selon la revendication 4, la matrice comprenant essentiellement du PVC.

6. Revêtement de sol en plastique souple selon la revendication 5, le PVC de la matrice présentant une valeur K de l'ordre de 40 à 80.

7. Revêtement de sol en plastique souple selon l'une quelconque ou plusieurs des revendications 5 à 6, le PVC contenant un plastifiant en une quantité de plus de 12 % en poids par rapport au PVC.

8. Revêtement de sol en plastique souple selon l'une quelconque ou plusieurs des revendications précédentes, la substance non compatible étant présente en une quantité de 1,5 à 15 % en poids par rapport à la quantité totale de la matrice.

9. Revêtement de sol en plastique souple selon l'une quelconque ou plusieurs des revendications précédentes, la surface régénérative repoussant les salissures étant formée d'une couche de revêtement.

10. Revêtement de sol en plastique souple selon la revendication 9, la couche de revêtement présentant une épaisseur de 10 à 100 µm.

11. Revêtement de sol en plastique souple selon la revendication 9 ou 10, la couche de revêtement étant formée à base de la matrice du revêtement de sol.

12. Revêtement de sol en plastique souple selon l'une quelconque ou plusieurs des revendications 9 à 11, seule la couche de revêtement contient la substance incompatible avec la matrice, en une quantité de 1,5 à 6 % en poids par rapport à la matrice de la couche de revêtement.

13. Revêtement de sol en plastique souple selon l'une quelconque ou plusieurs des revendications précédentes, la surface présentant une structure prédéterminée.

14. Revêtement de sol en plastique souple selon la revendication 13, la structure prédéterminée étant un profil présentant des bosses et des creux, l'intervalle moyen entre les pointes du profil dans la ligne médiane (Sm) étant supérieur à 200 µm et inférieur à 1000 µm.

15. Revêtement de sol en plastique souple selon la revendication 13 ou 14, la hauteur des bosses (profondeur de rugosité) étant de l'ordre de 20 µm à 200 µm.

16. Revêtement de sol en plastique souple selon l'une quelconque ou plusieurs des revendications 1 à 15, un matériau particulaire présentant une dureté supérieure à celle de la matrice étant inclus dans la matrice.

17. Revêtement de sol en plastique souple selon la revendication 16, la surface régénérative repoussant les salissures étant formée par une couche de revêtement selon l'une quelconque ou plusieurs des revendications 10 et 11 et le matériau particulaire présentant une dureté supérieure à celle de la matrice est inclus uniquement dans la couche de revêtement.

18. Revêtement de sol en plastique souple selon la revendication 16 ou 17, le matériau particulaire étant formé à base de polymère.

19. Revêtement de sol en plastique souple selon l'une quelconque ou plusieurs des revendications 16 à 18, les particules du matériau particulaire présentant un diamètre maximal de l'ordre de 2 um à 100 µm.

20. Revêtement de sol en plastique souple selon l'une quelconque ou plusieurs des revendications 16 à 19, le matériau particulaire présentant une dureté supérieure étant présent en une quantité de 1 à 20 % en poids par rapport à la quantité totale du matériau de matrice.

21. Revêtement de sol en plastique souple selon l'une quelconque ou plusieurs des revendications 16 à 20, les particules du matériau particulaire présentant une dureté supérieure étant incorporées complètement ou partiellement dans la surface de la matrice.

22. Revêtement de sol en plastique souple selon l'une quelconque ou plusieurs des revendications 16 à 21, la matrice comprenant essentiellement un PVC présentant une teneur en plastifiant supérieure à 12 % en poids par rapport au PVC et une valeur K de 40 à 80 et le matériau particulaire présentant une dureté supérieur comprend un PVC présentant une teneur en plastifiant supérieure à 12 % en poids par rapport au PVC et une valeur K d'environ 100.
